# FASCICULE DE BREVET EUROPEEN

(11) **EP 1 479 578 B1**
(45) Date de publication et mention de la délivrance du brevet: **13.12.2006**
(21) Numéro de dépôt: 04291196.6
(22) Date de dépôt: 10.05.2004
(51) Int. Cl.: B60T 7/06, B60R 21/05

(54) **Dispositif de pédalier rétractable en cas de choc frontal sur un véhicule**
Pedalanordnung, die sich im Falle eines Frontalaufpralls eines Fahrzeuges zurückzieht
Pedal assembly that is retractable in the case of a frontal impact on a vehicle

(30) Priorité: 19.05.2003 FR 0305964
(43) Date de publication de la demande: 24.11.2004
(73) Titulaire: Peugeot Citroën Automobiles S.A., 78140 Vélizy Villacoublay (FR)
(72) Inventeur: Da Silva, Victor, 92150 Suresnes (FR); Endrizzi, Silvio, 2582 HW Den Haag (NL); Chan-Ng-Yok, Laurent, 92800 Puteaux (FR); Humbert, Jean-Michel, 93330 Neuilly Sur Marne (FR); Piranda, Bruno, 91880 Bouville (FR); Jagger, Chris, Wakefield, West Yorkshire WF2 6NY (GB)
(74) Mandataire: Thinat, Michel

(56) Documents cités:
- EP-A- 0 873 923
- EP-A- 1 247 710
- EP-A- 1 279 563

## Description

La présente invention concerne le domaine de la sécurité du conducteur d'un véhicule automobile en cas de choc frontal sur ce dernier.

Avec un pédalier de type habituel, la pédale de frein et la pédale d'embrayage sont directement liées à des axes du pédalier. L'ensemble pédalier est fixé à la structure du véhicule et les pédales sont reliés à des tiges de commande respectivement du frein et de l'embrayage. Lors d'un choc frontal, la structure du véhicule, et donc le tablier de support du pédalier, se déforme et entraîne une remontée de l'ensemble pédalier dans les jambes du conducteur en occasionnant des lésions à ses membres inférieurs pouvant aller jusqu'à leur rupture.

Le dispositif selon l'invention est prévu pour limiter la remontée de l'ensemble pédalier en cas de choc frontal en améliorant ainsi la protection du conducteur. On notera à ce sujet que l'ensemble pédalier peut ne pas comprendre de pédale d'embrayage (cas des véhicules à boîte de vitesses automatique), mais uniquement une pédale de frein.

La présente invention concerne ainsi un dispositif de pédalier rétractable en cas de choc frontal sur un véhicule comportant un support de pédalier monté sur le tablier du véhicule dans la cave à pieds de ce dernier et sur lequel est articulé au moins un levier de commande de la pédale d'embrayage et/ou de frein.

Le document EP 0 873 923 B1 décrit un dispositif similaire et est considéré comme l'art antérieur le plus proche, divulgant le préambule de la revendication 1.

De manière à résoudre le problème indiqué ci-dessus, le dispositif est caractérisé en ce que le levier de commande de la pédale d'embrayage et/ou de frein comprend un flasque de commande présentant un axe de rotation horizontal perpendiculaire à l'axe longitudinal du véhicule et sur lequel est monté un flasque de renvoi pour une tige de commande reliée à ce flasque et agissant sur l'embrayage ou le frein, et en ce qu'on prévoit des moyens de solidarisation en translation latérale des flasques parallèlement à leur axe de rotation et des moyens de désolidarisation agissant sur les moyens de solidarisation pour désolidariser ces flasques en cas de choc frontal sur le véhicule en permettant un mouvement respectif d'écartement en translation latérale des flasques parallèlement à leur axe de rotation et provoquant leur désolidarisation, de sorte que, en absence d'un choc frontal sur le véhicule, les deux flasques restent solidaires l'un de l'autre et qu'une action sur le levier de commande de la pédale amène ladite tige de commande à agir sur l'embrayage ou le frein alors que, lors d'un choc frontal sur le véhicule, la désolidarisation des flasques l'un par rapport à l'autre amène la pédale à basculer vers la paroi de fond de la cave à pieds de son propre poids ou à l'aide d'un ressort de torsion.

Conformément à d'autres caractéristiques avantageuses de l'invention :
- le levier de commande de la pédale comporte un doigt pouvant se déplacer dans une lumière ménagée dans le flasque de renvoi et limitant la rotation relative des deux flasques lors de leur désolidarisation ;
- les moyens de solidarisation comprennent au moins deux pions de fixation traversant perpendiculairement les deux flasques et les solidarisant l'un à l'autre ;
- le doigt a une longueur supérieure à celle des pions de fixation pour permettre l'écartement axial des flasques et la transmission d'effort du levier de commande à la tige de commande suite au déclenchement du dispositif ;
- les moyens de désolidarisation comprennent un flasque d'écartement monté sur ledit axe de rotation entre le flasque de commande et le flasque de renvoi et solidaire d'un bras radial, les pions de fixation traversant perpendiculairement les trois flasques pour former un ensemble de flasques accolés et les faces en regard du flasque de commande et/ou du flasque de renvoi et du flasque d'écartement comprenant respectivement des rampes et des contre-rampes coopérant, lors d'un choc frontal sur le véhicule se répercutant sur le bras radial par l'intermédiaire d'une pièce solidaire de la structure du véhicule, pour provoquer le pivotement du bras radial et l'écartement axial du flasque de commande et/ou du flasque de renvoi par rapport au flasque d'écartement par rupture des pions de fixation des trois flasques ;
- la pièce solidaire de la structure du véhicule est placée à une distance prédéterminée du bras radial et est amenée à reculer pour venir heurter ce bras en l'amenant à pivoter, de sorte que le mouvement de came desdites rampes et contre-rampes assure une traction de rupture des pions de fixation et un mouvement respectif de translation latérale du flasque de commande et/ou du flasque de renvoi par rapport au flasque d'écartement en entraînant une désolidarisation du flasque de commande et du flasque de renvoi l'un par rapport à l'autre et amenant la pédale à basculer vers la paroi de fond de la cave à pieds de son propre poids ou à l'aide d'un ressort de torsion.
- les pions de fixation sont solidaires du flasque de renvoi ou du flasque de commande et solidarisent de façon accolée les trois flasques par leurs extrémités en forme de collerette se rompant lors d'un écartement du flasque de commande et/ou du flasque de renvoi par rapport au flasque d'écartement ;
- la pièce solidaire de la structure du véhicule est un élément rigidement lié à la traverse de planche de bord du véhicule, tel qu'un support colonne destiné à maintenir la colonne de direction par rapport à ladite traverse ;
- les flasques sont réalisés par emboutissage-contre-emboutissage pour former des ergots en forme de rampes et des emboutis en forme de fentes délimitant lesdites rampes et contre-rampes ;
- les flasques sont réalisés en matière plastique injectée pour former des ergots en forme de rampes et des emboutis en forme de fentes délimitant lesdites rampes et contre-rampes ;
- le bras radial est réalisé en métal et, par exemple, en acier ;
- le bras radial est réalisé en matière plastique.
- une rondelle est interposée entre le flasque de commande et le flasque de renvoi dans la même épaisseur que le basculeur qui comporte à cet effet un perçage de réception de la rondelle, la rotation étant libre entre le basculeur et la rondelle ;
- la rondelle comporte de chaque côté au moins deux pions, les pions situés du côté du flasque de commande étant emmanchés à force dans des orifices correspondants de ce flasque et les pions situés du côté du flasque de renvoi étant montés coulissants dans des orifices correspondants de ce flasque ;
- la rondelle et les pions sont de préférence réalisés en métal ;
- des rivets, au nombre d'au moins deux, traversent le flasque de commande, le basculeur et le flasque de renvoi afin de solidariser l'ensemble dans la direction transversale en l'absence de choc, ces rivets coulissant dans des lumières prévues dans le basculeur, en permettant à ce dernier d'être, en cas de choc, entraîné en rotation sous l'influence de la pièce précitée solidaire de la structure du véhicule sans entraîner simultanément la pédale d'embrayage ou de frein ;
- un système à clavette est prévu à la place de la rondelle.

L'invention sera mieux comprise, et d'autres buts, caractéristiques, détails et avantages de celle-ci apparaîtront plus clairement au cours de 1a description explicative qui va suivre faite en référence aux dessins annexés donnés uniquement à titre d'exemple illustrant un mode de réalisation de l'invention et dans lesquels :
- la figure 1A est une vue de droite et en perspective d'un dispositif de pédalier selon l'invention et montre un flasque de renvoi solidaire du levier de commande de la pédale d'embrayage ou de frein pour la commande de l'embrayage ou du frein d'un véhicule en l'absence d'un choc frontal ;
- la figure 1B montre le même dispositif de pédalier vu de gauche ;
- la figure 2A montre le dispositif de pédalier de la figure 1A à l'état désolidarisé des divers éléments après un choc frontal sur le véhicule ;
- la figure 2B montre le dispositif de pédalier de la figure 1B dans le même état que celui de la figure 2A;
- la figure 3 est une vue schématique du dispositif de pédalier assemblé selon les figures 1A et 1B vu du côté de la pédale d'embrayage ou de frein en l'absence d'un choc frontal, et montre notamment un bras radial déjà illustré aux figures précédentes, qui suit le déplacement du levier de commande de la pédale d'embrayage ou de frein et commande la rotation du flasque de renvoi avec lequel il est solidaire ;
- la figure 4 est une vue semblable à la figure 3 en début du choc frontal, le bras radial de la figure 3 ne coopérant pas encore avec une pièce solidaire de la structure du véhicule pour provoquer une désolidarisation du levier de commande de la pédale d'embrayage ou de frein et du flasque de renvoi ;
- la figure 5 est une vue semblable à la figure 4 à la fin du choc frontal, le bras radial ayant coopéré avec la pièce solidaire de la structure du véhicule pour provoquer une désolidarisation de la pédale d'embrayage ou de frein et du flasque de renvoi selon les figures 2A et 2B et un basculement de la pédale rendue libre en rotation ;
- la figure 6 est une vue schématique du dispositif de pédalier assemblé selon les figures 1A et 1B vu du côté du flasque de renvoi en l'absence d'un choc frontal, avec le bras radial qui suit le déplacement du levier de commande de la pédale d'embrayage ou de frein et commande la rotation du flasque de renvoi avec lequel il est solidaire ;
- la figure 7 est une vue semblable à la figure 6 en début de choc frontal, le bras radial de la figure 6 ne coopérant pas encore avec la pièce solidaire de la structure du véhicule pour provoquer une désolidarisation du levier de commande de la pédale d'embrayage ou de frein et du flasque de renvoi ;
- la figure 8 est une vue semblable à la figure 7 à la fin du choc frontal, le bras radial ayant coopéré avec la pièce solidaire de la structure du véhicule pour provoquer une désolidarisation de la pédale d'embrayage ou de frein et du flasque de renvoi selon les figures 2A et 2B, et montre un doigt solidaire du levier de commande de la pédale d'embrayage ou de frein à la fin de sa course dans une lumière ménagée dans le flasque de renvoi, de façon que la pédale puisse de nouveau assurer sa fonction d'entraînement du flasque de renvoi après basculement de la pédale ;
- la figure 9 est une vue séparée du levier de commande de la pédale d'embrayage ou de frein des figures précédentes ;
- la figure 10 est une vue semblable à la figure 6 avant le montage du flasque de renvoi ;
- la figure 11 est une vue séparée du flasque de renvoi des figures précédentes ;
- la figure 12 est une vue semblable à la figure 3 avant le montage du levier de commande de la pédale d'embrayage ou de frein mais montre, cependant et pour des raisons d'explication, un doigt de guidage solidaire du levier de commande ;
- la figure 13 est une vue semblable à la figure 3 mais avant le montage du dispositif de pédalier dans l'habitacle du véhicule, de sorte qu'est omise la pièce solidaire de la structure du véhicule et qui est amenée à coopérer avec le bras radial en cas de choc frontal ; et
- les figures 14 à 16 représentent une modification du dispositif de pédalier des figures précédentes adaptée à une variante de transmission d'effort.

De manière connue pour tout dispositif de pédalier, le dispositif selon l'invention de pédalier rétractable en cas de choc frontal sur un véhicule comporte un support de pédalier maintenu sur le tablier du véhicule dans la cave à pieds de ce dernier et sur lequel est articulé au moins un levier de commande de la pédale de frein ainsi qu'en général un levier de commande de la pédale d'embrayage, sauf dans le cas d'un véhicule à boîte de vitesses automatique.

Dans ce qui suit, on parlera du levier de commande de la pédale d'embrayage ou de frein, étant bien entendu que cette expression recouvre le cas où on prévoit à la fois un levier de commande de la pédale de frein et un levier de commande de la pédale d'embrayage, ou seulement le levier de commande de la pédale de frein.

Ainsi, aux dessins, le dispositif de pédalier référencé en son ensemble en 1 comprend un levier de commande 2 de la pédale d'embrayage ou de frein 3. Le levier de commande 2 est solidaire d'un flasque 4 dit de commande et qui est monté sur un axe 5 qui constitue l'axe commun du dispositif de pédalier 1.

Un flasque de renvoi 6 est monté sur l'axe 5, à l'opposé du flasque de commande 4 et une tige de commande 7 est reliée au flasque de renvoi 6 pour agir, de manière connue, sur le système d'embrayage ou de frein. A cet effet, le flasque de renvoi 6 et le flasque de commande 4 sont réunis entre eux par des moyens de solidarisation en translation latérale dont il sera question plus loin et qui sont prévus, conformément à l'invention, pour s'écarter et désolidariser les flasques 4 et 6 l'un par rapport à l'autre en cas de choc frontal sur le véhicule.

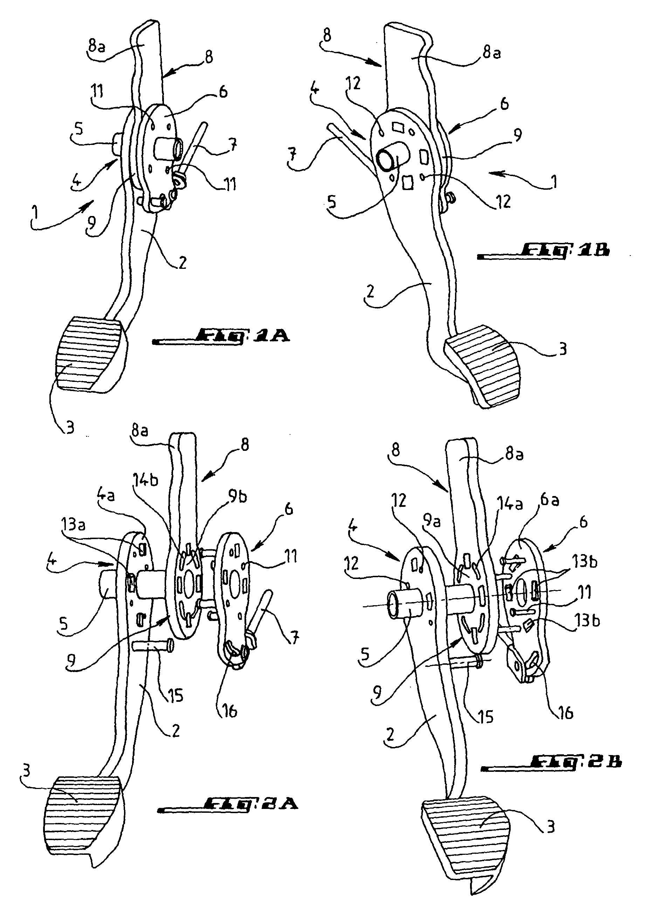

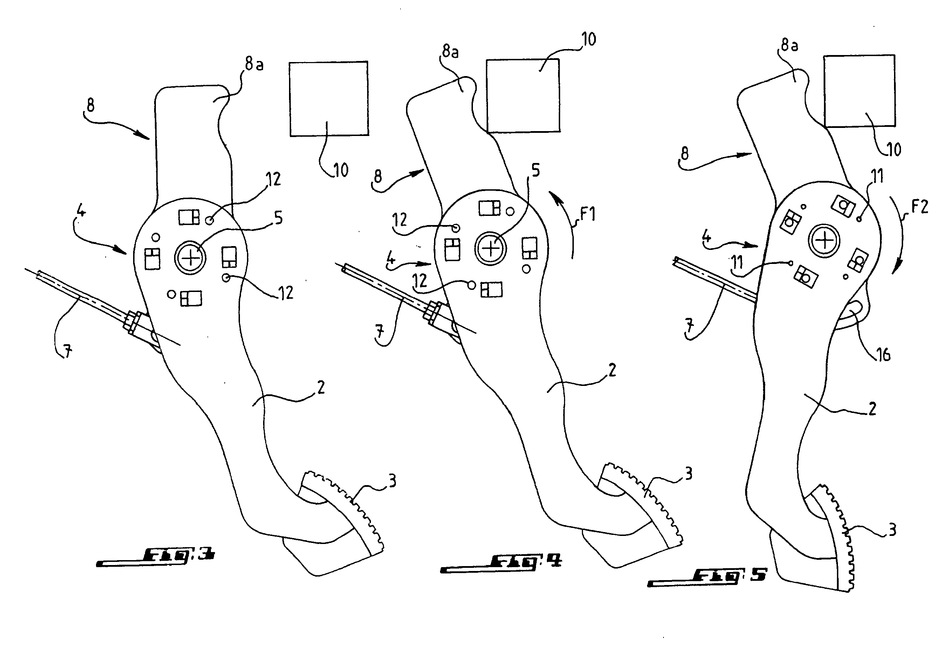

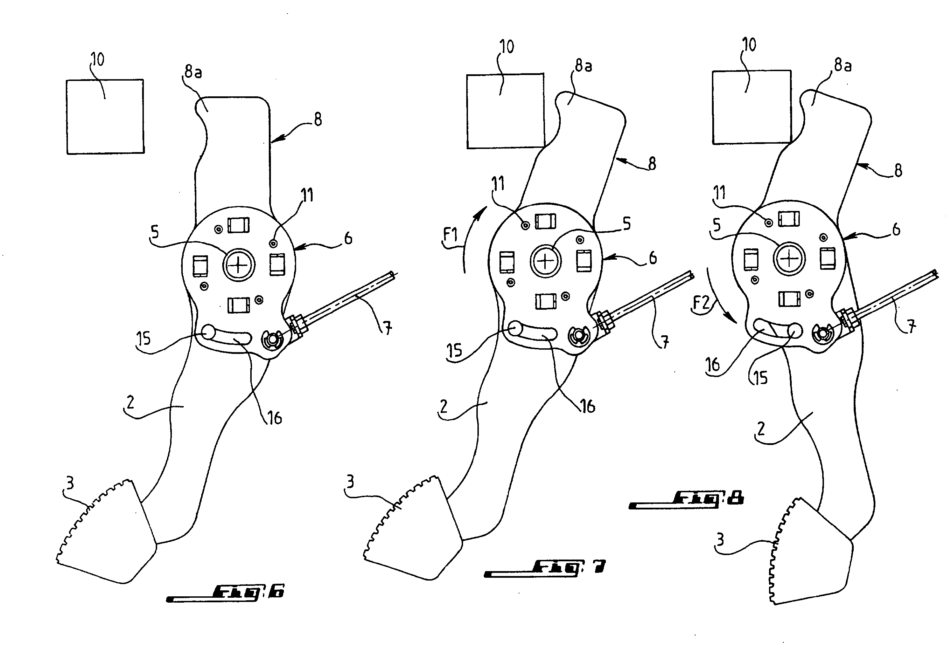

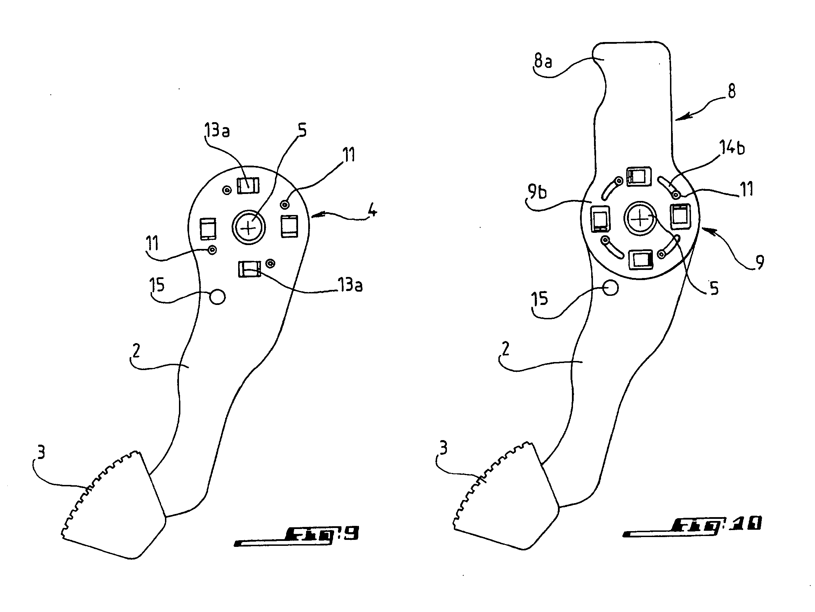

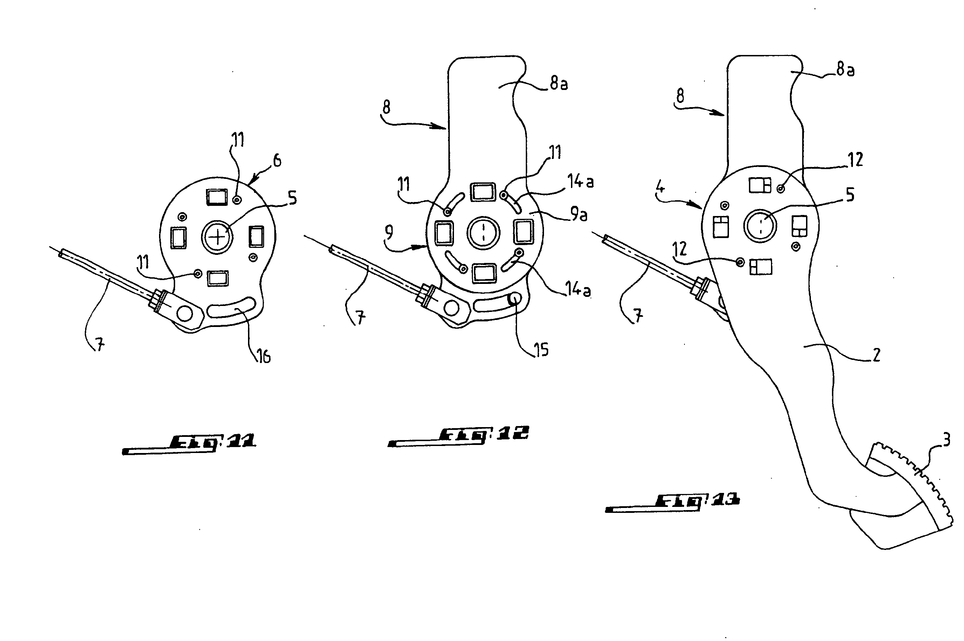

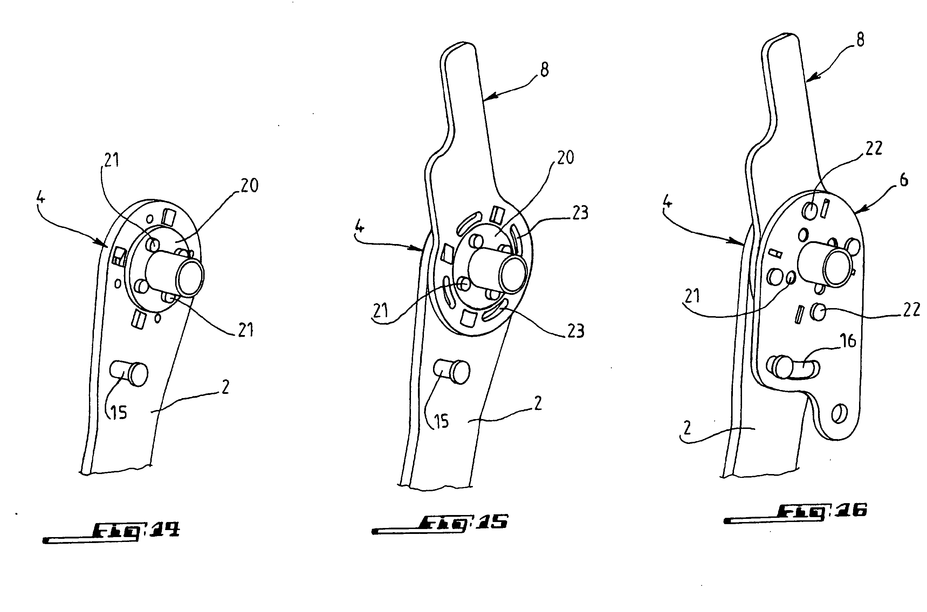

De manière à obtenir ce qui précède et conformément à l'invention, on prévoit en outre un bras radial 8 formant basculeur et dont le flasque 9 est monté sur l'axe 5 entre le flasque de commande 4 et le flasque de renvoi 6. Comme on le voit en particulier aux figures 3 et 6 dans lesquelles le dispositif de pédalier 1 est représenté en état de fonctionnement normal en position accolée des flasques selon les figures 1A et 1B, c'est-à-dire avant un choc frontal, le basculeur 8 se trouve à une distance prédéterminée d'une pièce 10 solidaire de la structure du véhicule et qui est en général un élément rigidement lié à la traverse de planche de bord du véhicule, tel qu'un support colonne destiné à maintenir la colonne de direction par rapport à ladite traverse. Dans ce qui suit, la pièce 10 sera dont simplement appelée le support colonne mais elle peut être toute pièce solidaire de la structure du véhicule.

Comme on le voit à l'état assemblé des figures 1A et 1B et à l'état désassemblé des figures 2A et 2B, les moyens de solidarisation du flasque de renvoi 6 et du flasque de commande 4 sont constitués par au moins deux pions de fixation 11 qui traversent perpendiculairement ces deux flasques ainsi que le flasque 9 dit d'écartement pour des raisons qui apparaitront dans ce qui suit et qui est placé entre ces derniers pour former un ensemble de flasques accolés.

De manière à assurer cette action de solidarisation à l'état accolé, les pions de fixation 11, qui sont au nombre de quatre dans le présent mode de réalisation, présentent une extrémité solidaire par exemple du flasque de renvoi 6 et traversent l'ensemble des flasques à la façon d'un rivet, le flasque de commande 4 présentant à cet effet une collerette 12 dans laquelle est rivetée l'extrémité libre du pion de fixation 11. Bien évidemment, le pion de fixation 11 peut présenter une extrémité solidaire du flasque de commande 4, tandis qu'une collerette sera prévue sur le flasque de renvoi 6 pour le rivetage de ce pion.

Conformément à l'invention et pour obtenir une désolidarisation du flasque de renvoi 6 par rapport au flasque de commande 4, ces flasques qui sont de préférence réalisés par emboutissage - contre-emboutissage ou en matière plastique injectée présentent sur leur face en regard un système coopérant à rampes et contre-rampes. Ainsi, comme on le voit dans les diverses figures, et notamment aux figures 2A et 2B, la face 4a du flasque de commande 4 en regard de la face 9a du flasque d'écartement 9 comporte des ergots 13a en forme de rampe, tandis que cette face 9a comporte des emboutis correspondants en forme de fentes circulaires 14a.

De même, la face 6a du flasque de renvoi 6 en regard de la face 9b du flasque d'écartement 9 comporte des ergots 13b en forme de rampes, tandis que cette face 9b comporte des emboutis correspondants en forme de fentes circulaires 14b.

A ce sujet, et bien que l'on ai représenté aux dessins les ergots 13a et 13b respectivement sur le flasque de commande 4 et sur le flasque de renvoi 6, tandis que les fentes 14a et 14b sont prévues sur les faces respectives du flasque d'écartement 9, on peut prévoir d'autres moyens pour que les faces en regard des divers flasques comprennent un motif coopérant de rampes et contre-rampes. Il est possible de même, conformément à l'invention, de ne prévoir un tel motif de rampes et contre-rampes uniquement sur les faces en regard 4a et 9a du flasque de commande et du flasque d'écartement ou encore uniquement sur les faces en regard 6a et 9b du flasque de renvoi et du flasque d'écartement.

Le dispositif de pédalier tel que décrit ci-dessus fonctionne de manière traditionnelle en l'absence de choc frontal. Le levier de commande 2 de la pédale d'embrayage ou de frein 3 sur laquelle appuie le conducteur entraîne en rotation le flasque de renvoi 6 qui commande le système de frein ou d'embrayage par l'intermédiaire de la tige de commande 7. Le basculeur 8 est alors entraîné librement par ce mouvement de rotation et les efforts appliqués par le levier de commande 2 sur le flasque de renvoi 6 sont transmis par les pions de fixation 11 qui solidarisent l'ensemble des flasques 4, 6 et 9 comme on le voit aux figures 1A et 1B.

Au contraire, en présence d'un choc frontal sur le véhicule, le support colonne 10 qui, comme on l'a vu plus haut, sert à maintenir la colonne de direction par rapport à la traverse de planche de bord, subit une déformation ou un recul quasi nul ou relativement faible au regard de la déformation ou du recul subi par le tablier. On rappelle à ce sujet que le tablier est une paroi qui relie la traverse de planche de bord au soubassement du véhicule et supporte le pédalier. Ainsi, le recul du tablier lors d'un choc frontal entraîne du même coup le recul du pédalier avec les inconvénients mentionnés précédemment en l'absence du dispositif de pédalier conforme à l'invention rétractable en cas de choc frontal.

Du fait du dispositif selon l'invention, le recul ci-dessus du pédalier entraîne l'extrémité libre 8a du basculeur 8 à buter contre le support colonne 10 selon les figures 4 et 7, ce qui tend à faire remonter le levier de commande 2 selon la flèche F1, le basculeur poursuivant ensuite son mouvement et le terminant selon les figures 5 et 8. Ce mouvement entraîne la rotation du basculeur 8 autour de l'axe 5 du levier de commande 2. Le pivotement du basculeur 8 provoque un mouvement de came entre les ergots des flasques 4 et 6 (ou d'un seul de ces flasques) et les fentes du flasque d'écartement 9 respectivement en regard ou, de manière générale, des rampes et contre-rampes des faces en regard des flasques correspondants. Ce mouvement de came entraîne alors une traction de rupture des pions de fixation 11 qui se rompent et sortent de leur collerette 12 de maintien dans le flasque correspondant. Une telle traction de rupture a pour résultat un mouvement respectif d'écartement en translation latérale du flasque de commande 4 et/ou du flasque de renvoi 6 par rapport au flasque ainsi appelé d'écartement 9 en entraînant une désolidarisation du flasque de commande 4 et du flasque de renvoi 6 l'un par rapport à l'autre. Le levier de commande 2 devient alors libre en rotation autour de l'axe 5, ce qui amène la pédale à basculer selon la flèche F2 vers la paroi de fond de la cave à pieds et entraîne une mise au plancher de la pédale d'embrayage ou de frein 3 par son propre poids ou à l'aide d'un ressort de torsion, non représenté.

Le fonctionnement ci-dessus désolidarise complètement, en cas de choc frontal, notamment le système de freinage et la pédale de frein. Cependant, même si la pédale, et le véhicule en son ensemble, se trouve à priori hors d'usage après un tel choc, il peut être nécessaire de prévoir que l'on puisse encore actionner la pédale de frein après désolidarisation du flasque de commande et du flasque de renvoi.

Pour ainsi répondre notamment à des contraintes réglementaires ou pour rassurer certains conducteurs sur une éventuelle désolidarisation intempestive du flasque de commande et du flasque de renvoi, ce qui provoquerait une absence totale de freinage, le levier de commande 2 comporte un doigt 15 qui, à l'état désolidarisé de ces deux flasques, peut se déplacer dans une lumière arquée 16 ménagée dans le flasque de renvoi en limitant la rotation relative des deux flasques et autorisant le freinage en fin de course du doigt 15 dans la lumière arquée 16 (voir figures 8 et 15). Autrement dit, lorsque le doigt 15 arrive en fin de course en butée à une extrémité de la lumière 16, la pédale est de nouveau apte à assurer sa fonction d'entraînement du flasque de renvoi 6.

Bien évidemment, la longueur du doigt 15 est supérieure à celle des pions de fixation 11 pour permettre l'écartement axial des flasques, et les figures 2A et 2B montrent à ce sujet un état de désolidarisation complet des divers éléments du dispositif de manière à bien faire voir ces éléments mais dans une disposition d'arrachement avec notamment le doigt 15 complètement sorti de sa lumière.

Le basculeur 8, ainsi que son flasque 9, qui ensemble constituent la pièce maîtresse de la présente invention est de préférence réalisé en acier. Cependant le basculeur peut aussi bien être réalisé en matière plastique car il ne contribue pas à la transmission des efforts en situation normale d'utilisation du pédalier. On notera que dans ce mode de réalisation, la transmission d'effort en rotation peut être uniquement assurée par les pions de fixation 11 qui traversent les flasques 4, 6 et 9. Il est cependant nécessaire que le basculeur 8 présente une résistance mécanique suffisante, d'une part, pour ne pas se rompre en cas de choc contre le support colonne 10 et, d'autre part, pour résister à l'effort de came entre les rampes et contre-rampes des diverses faces en regard des flasques.

Dans une autre forme de réalisation de l'invention montrée aux figures 14 à 16, on prévoit une rondelle 20 interposée entre le flasque de renvoi 6 et le flasque de commande 4, ce flasque de commande étant solidaire du levier de commande 2 de la pédale d'embrayage ou de frein et étant en général appelé l'âme pédale. La rondelle 20 présente la même épaisseur que le basculeur 8 qui comporte un perçage pouvant recevoir cette rondelle. La rondelle 20 comporte de chaque côté au moins deux pions 21 et par exemple quatre pions aux dessins, les pions 21 situés du côté du levier de commande 2 de la pédale étant emmanchés à force dans des orifices correspondant de l'âme pédale 4. Les pions 21 situés du côté du flasque de renvoi 6 sont montés coulissants dans les orifices correspondant du flasque de renvoi, de manière à pouvoir entraîner ce flasque en rotation mais à être libre en translation par rapport à celui-ci selon l'axe transversal. On constate que la rotation est libre entre le basculeur 8 et la rondelle 20.

On prévoit de plus toujours des rivets 22 au nombre d'au moins deux et par exemple au nombre de quatre aux dessins, traversant l'âme pédale ou flasque de commande 4, le basculeur 8 et le flasque de renvoi 6 afin de maintenir l'ensemble dans la direction transversal en l'absence de choc. Les axes des rivets 22 coulissent dans des lumières 23 prévues dans le basculeur 8, comme dans le mode de réalisation des figures précédentes, en permettant au basculeur 8 d'être, en cas de choc, entraîné en rotation sous l'influence du support de colonne (voir la référence 10 des figures 3 à 8), sans entraîner simultanément la pédale.

Comme dans la réalisation des figures précédentes, le basculeur 8 peut être réalisé en matière plastique, tandis que la rondelle 20 et ses pions 21 sont de préférence en métal pour assurer la transmission d'effort en rotation.

Bien que cela n'ait pas été représenté, il est possible d'utiliser à la place de la rondelle d'entraînement 20, tout autre moyen équivalent et par exemple un système à clavette. On notera à ce sujet que l'idée sous-jacente est que les fonctions soient dissociées entre les différents composants, ce qui facilite grandement les choix de matériau et de dimensionnement.

En tout état de cause, cependant, l'invention n'est pas limitée aux exemples de réalisation représentés et décrits en détail car diverses modifications peuvent y être apportées sans sortir de son cadre.

## Revendications

1. Dispositif de pédalier rétractable (1) en cas de choc frontal sur un véhicule comportant un support de pédalier monté sur le tablier du véhicule dans la cave à pieds de ce dernier et sur lequel est articulé au moins un levier de commande (2) de la pédale d'embrayage et/ou de frein (3), selon lequel ce levier de commande (2) comprend un flasque de commande (4) présentant un axe de rotation horizontal (5) perpendiculaire à l'axe longitudinal du véhicule et sur lequel est monté un flasque de renvoi (6) pour une tige de commande (7) reliée à ce flasque et agissant sur l'embrayage ou le frein, et selon lequel on prévoit des moyens (11, 12) de solidarisation en translation latérale des flasques parallèlement à leur axe de rotation (5) et des moyens de désolidarisation (8, 9 ; 13a, 13b ; 14a, 14b), ces moyens de désolidarisation agissant sur les moyens de solidarisation (11, 12) pour désolidariser ces flasques en cas de choc frontal sur le véhicule en permettant un mouvement respectif d'écartement en translation latérale des flasques parallèlement à leur axe de rotation et provoquant leur désolidarisation, de sorte que, en absence d'un choc frontal sur le véhicule, les deux flasques (4 et 6) restent solidaires l'un de l'autre et qu'une action sur le levier de commande (2) de la pédale (3) amène ladite tige de commande (7) à agir sur l'embrayage ou le frein alors que, lors d'un choc frontal sur le véhicule, la désolidarisation des flasques (4, 6) l'un par rapport à l'autre amène la pédale d'embrayage ou de frein (2) à basculer vers la paroi de fond de la cave à pieds de son propre poids ou à l'aide d'un ressort de torsion, **caractérisé en ce que** ces moyens de désolidarisation (8,9; 13a, 13b; 14a, 14b) comprennent un flasque d'écartement (9) monté sur ledit axe de rotation (5) entre le flasque de commande (4) et le flasque de renvoi (6).

2. Dispositif selon la revendication 1, **caractérisé en ce que** le levier de commande (2) de la pédale (3) comporte un doigt (15) pouvant se déplacer dans une lumière (16) ménagée dans le flasque de renvoi (6) et limitant la rotation relative des deux flasques (4, 6) lors de leur désolidarisation.

3. Dispositif selon l'une des revendications 1 ou 2, **caractérisé en ce que** les moyens de solidarisation comprennent au moins deux pions de fixation (11) et de préférence quatre pions de fixation traversant perpendiculairement les deux flasques (4 et 6) et les solidarisant l'un à l'autre.

4. Dispositif selon la revendication 3, **caractérisé en ce que** le doigt (15) a une longueur supérieure à celle des pions de fixation (11) pour permettre l'écartement axial des flasques (4 et 6) et la transmission d'effort du levier de commande (2) à la tige de commande (7) suite au déclenchement du dispositif.

5. Dispositif selon l'une des revendications 1 à 4, **caractérisé en ce que** le flasque d'écartement (9) est solidaire d'un bras radial formant basculeur (8), **en ce que** les pions de fixation (11) traversent perpendiculairement les trois flasques (4, 6, 9) pour former un ensemble de flasques accolés, les faces en regard (4a, 9a, 9b, 6a) du flasque de commande (4) et/ou du flasque de renvoi (6) et du flasque d'écartement (9) comprenant respectivement des rampes et contre-rampes (13a, 13b ; 14a, 14b) coopérant, lors d'un choc frontal sur le véhicule se répercutant sur le basculeur (8) par l'intermédiaire d'une pièce (10) solidaire de la structure du véhicule, pour provoquer le pivotement du basculeur (8) et l'écartement axial du flasque de commande (4) et/ou du flasque de renvoi (6) par rapport au flasque d'écartement (9) par rupture des pions de fixation (11) des trois flasques.

6. Dispositif selon la revendication 5 **caractérisé en ce que** la pièce (10) solidaire de la structure du véhicule est placée à une distance prédéterminée du basculeur (8) et est amenée à reculer pour venir heurter le basculeur en l'amenant à pivoter, de sorte que le mouvement de came desdites rampes et contre-rampes (13a, 13b ; 14a, 14b) assure une traction de rupture des pions de fixation (11) et un mouvement respectif de translation latérale du flasque de commande (4) et/ou du flasque de renvoi (6) par rapport au flasque d'écartement (9) en entraînant une désolidarisation du flasque de commande (4) et du flasque de renvoi (6) l'un par rapport à l'autre et amenant la pédale (3) à basculer vers la paroi de fond de la cave à pieds de son propre poids ou à l'aide d'un ressort de torsion.

7. Dispositif selon l'une des revendications 5 ou 6, **caractérisé en ce que** les pions de fixation (11) sont solidaires du flasque de renvoi (6) ou du flasque de commande (4) et solidarisent de façon accolée les trois flasques (4, 6, 9) par leurs extrémités en forme de collerette (12) se rompant lors d'un écartement du flasque de commande (4) et/ou du flasque de renvoi (6) par rapport au flasque d'écartement (9).

8. Dispositif selon l'une des revendications 5 à 7, **caractérisé en ce que** la pièce (10) solidaire de la structure du véhicule est un élément rigidement lié à la traverse de planche de bord du véhicule, tel qu'un support colonne destiné à maintenir la colonne de direction par rapport à ladite traverse.

9. Dispositif selon l'une des revendications 5 à 8, **caractérisé en ce que** les flasques sont réalisés par emboutissage - contre-emboutissage pour former des ergots en forme de rampes (13a, 13b) et des emboutis en forme de fentes (14a, 14b) délimitant lesdites rampes et contre-rampes.

10. Dispositif selon l'une des revendications 5 à 8, **caractérisé en ce que** les flasques sont réalisés en matière plastique injectée pour former des ergots en forme de rampe (13a, 13b) et des emboutis en forme de fentes (14a, 14b) délimitant lesdites rampes et contre-rampes.

11. Dispositif selon l'une des revendications 1 à 9, **caractérisé en ce que** le basculeur (8) est réalisé en métal et, par exemple, en acier.

12. Dispositif selon l'une des revendications 1 à 9, **caractérisé en ce que** le basculeur (8) est réalisé en matière plastique.

13. Dispositif selon l'une des revendications 1 à 12, **caractérisé en ce qu**'une rondelle (20) est interposée entre le flasque de commande (4) et le flasque de renvoi (6) dans la même épaisseur que le basculeur (8) qui comporte à cet effet un perçage de réception de la rondelle, la rotation étant libre entre le basculeur (8) et la rondelle (20).

14. Dispositif selon la revendication 13, **caractérisé en ce que** la rondelle (20) comporte de chaque côté au moins deux pions (21), les pions situés du côté du flasque de commande (4) étant emmanchés à force dans des orifices correspondants de ce flasque et les pions situés du côté du flasque de renvoi (6) étant montés coulissant dans des orifices correspondants de ce flasque.

15. Dispositif selon la revendication 14, **caractérisé en ce que** la rondelle (20) et les pions (21) sont de préférence réalisés en métal.

16. Dispositif selon l'une des revendications 1 à 15, **caractérisé en ce que** des rivets (22), au nombre d'au moins deux, traversent le flasque de commande (4), le basculeur (8) et le flasque de renvoi (6) afin de solidariser l'ensemble dans la direction transversale en l'absence de choc, ces rivets coulissant dans des lumières (23) prévues dans le basculeur (8), en permettant à ce dernier d'être, en cas de choc, entraîné en rotation sous l'influence de la pièce précitée (10) sans entraîner simultanément la pédale d'embrayage ou de frein.

17. Dispositif selon l'une des revendications 13 à 16, **caractérisé en ce qu**'un système à clavette est prévu à la place de la rondelle (20).

## Claims

1. Retractable pedal assembly device (1) in the event of frontal impact on a vehicle, comprising a pedal assembly support mounted on the bulkhead of the vehicle in the foot pit of the latter and on which at least one control lever (2) is articulated of the clutch pedal and/or brake pedal (3), in which this control lever (2) comprises a control flange (4) having a horizontal rotating shaft perpendicular to the longitudinal axis of the vehicle, and on which a return flange (6) is mounted for a control rod (7) connected to this flange and acting on the clutch or brake, and in which means (11,12) are provided for securing the flanges together in lateral translation parallel to their rotation shaft (5) and separating means (8,9: 13a;13b; 14a,14b), these separating means acting on the securing means (11,12) to separate the flanges in the event of frontal impact on the vehicle by allowing a respective drawing away movement of the flanges in lateral translation parallel to their axis of rotation and causing their separation, so that if there is no frontal impact on the vehicle, the two flanges (4,6) remain secured to each other and any action on the control lever (2) of the pedal (3) brings said control rod (7) to act on the clutch or brake, whereas in the event of a frontal impact on the vehicle the separation of flanges (4,6) away from each other causes the clutch or brake pedal (2) to tilt downwards towards the floor of the foot pit under its own weight or assisted by a torsion spring, **characterized in that** these separation means (8, 9; 13a,13b; 14a,14b) comprise a spacer flange (9) mounted on said rotation shaft (5) between the control flange (4) and the return flange (6).

2. Device as in claim 1, **characterized in that** the control lever (2) of pedal (3) comprises a finger (15) able to move within a lumen (16) arranged in the return flange (6) and limiting the relative rotation of the two flanges (4, 6) at the time of their separation.

3. Device as in either of claims 1 or 2, **characterized in that** the securing means comprise at least two fixing pins (11) and preferably four fixing pins passing perpendicularly through the two flanges (4,6) and securing them to each other.

4. Device as in claim 3, **characterized in that** the length of the finger (15) is greater than the length of the fixing pins (11) to allow axial separation of the flanges (4,6) and transmission of forces from the control lever (2) to the control rod (7) after triggering of the device.

5. Device as in any of claims 1 to 4, **characterized in that** the spacer flange (9) is secured to a radial arm forming a rocker arm (8), **in that** the fixing pins (11) pass perpendicularly through the three flanges (4,6,9) to form a group of adjacent flanges, the opposite facing surfaces (4a,9a,9b,6a) of the control flange (4) and/or of the return flange (6) and of the spacer flange (9) respectively comprising ramps and counter-ramps (13a,13b; 14a,14b) which, in the event of frontal impact on the vehicle transmitted to the rocker arm(8) via a part (10) joined to the structure of vehicle, cooperate together to cause pivoting of the rocker arm (8) and axial spacing of the control flange (4) and/or of the return flange (6) away from the spacer flange (9) through rupture of the fixing pins (11) of the three flanges.

6. Device as in claim 5, **characterized in that** the part (10) joined to the structure of the vehicle is positioned at a predetermined distance from the rocker arm (8) and can be caused to recoil so that it comes to hit the rocker arm causing it to pivot so that the cam movement of said ramps and counter-ramps (13a,13b; 14a,14b) ensures rupturing traction of the fixing pins (11) and a respective lateral translation movement of the control flange (4) and/or return flange (6) with respect to the spacer flange (9) by driving the control flange (4) and return flange (6) apart and bringing the pedal (3) to tilt downwards towards the floor of the foot pit under its on weight or assisted by a torsion spring.

7. Device as in either of claims 5 or 6, **characterized in that** the fixing pins (11) are secured to the return flange (6) or the control flange (4) and join the three flanges (4,6,9) together side by side via their ends in the form of a collar (12) which breaks when the control flange (4) and/or return flange (6) is drawn away from the spacer flange (9).

8. Device as in any of claims 5 to 7, **characterized in that** the part (10) secured to the structure of the vehicle is an element rigidly joined to the cross beam of the vehicle floorboard, such as column support intended to hold the steering column in place with respect to said cross beam.

9. Device as in any of claims 5 to 8, **characterized in that** the flanges are made by drawing/ reverse-drawing to form lugs in the form of ramps (13a,13b) and drawings in the form of slots (14a,14b) delimiting said ramps and counter-ramps.

10. Device as in any of claims 5 to 8, **characterized in that** the flanges are made in injected plastic material to form lugs in the form of ramps (13a,13B) and drawings in the form of slots (14a,14b) delimiting said ramps and counter-ramps.

11. Device as in any of claims 1 to 9, **characterized in that** the rocker arm (8) is made in metal, steel for example.

12. Device as in any of claims 1 to 9, **characterized in that** the rocker arm (8) is made in plastic material.

13. Device as in any of claims 1 to 12, **characterized in that** a washer (20) is inserted between the control flange (4) and the return flange (6) in the same thickness as the rocker arm (8) which for this purpose comprises a receiving bore-hole for the washer, rotation being free between the rocker arm (8) and the washer (20).

14. Device as in claim 13, **characterized in that** the washer (20), on either side, comprises at least two pins (21), the pins located on the side of the control flange (4) being press-fitted into corresponding orifices in this flange, and the pins located on the side of the return flange (6) being slidingly mounted in corresponding orifices of this flange.

15. Device as in claim 14, **characterized in that** the washer (20) and pins (21) are preferably made in metal.

16. Device as in any of claims 1 to 15, **characterized in that** rivets (22, at least two in number, pass through the control flange (4) the rocker arm (8) and the return flange (6) to secure the whole in transversal direction if there is no impact, these rivets sliding in lumens (23) provided in the rocker arm (8) allowing the latter, in the event of impact, to be driven in rotation under the influence of the above-cited part (10) without simultaneously carrying with it the clutch or brake pedal.

17. Device as in any of claims 13 to 16, **characterized in that** a cotter key system is provided instead of the washer (20).

## Patentansprüche

1. Bei einem Frontalaufprall auf ein Fahrzeug zurückziehbare Pedalvorrichtung (1), umfassend einen Pedalträger, der auf der Spritzwand des Fahrzeugs im Fußraum desselben befestigt ist, und auf dem mindestens ein Bedienhebel (2) des Kupplungs- und/oder Bremspedals (3) angelenkt ist, wobei dieser Bedienhebel (2) eine Steuerscheibe (4) umfasst, mit einer senkrecht zur Längsachse des Fahrzeugs verlaufenden horizontalen Rotationsachse (5) umfasst, und auf der eine Vorgelegescheibe (6) für einen Steuerhebel (7) montiert ist, der mit dieser Scheibe verbunden ist und auf die Kupplung oder die Bremse einwirkt, und wobei Mittel (11, 12) zur Verbindung in seitlicher Verschiebung der Scheiben parallel zu ihrer Rotationsachse (5) und Trennmittel (8, 9; 13a, 13b; 14a, 14b) vorgesehen sind, wobei diese Trennmittel auf die Verbindungsmittel (11, 12) einwirken, um diese Scheiben bei einem Frontalaufprall auf das Fahrzeug zu trennen, indem sie eine jeweilige Beabstandungsbewegung in seitlicher Verschiebung der Scheiben parallel zu ihrer Rotationsachse ermöglichen und ihre Trennung hervorrufen, so dass, bei Abwesenheit eines Frontalaufpralls auf das Fahrzeug, die beiden Scheiben (4 und 6) miteinander verbunden bleiben und dass eine Aktion auf den Bedienhebel (2) des Pedals (3) den besagten Steuerhebel (7) dazu veranlasst, auf die Kupplung oder die Bremse einzuwirken, wobei bei einem Frontalaufprall auf das Fahrzeug die Trennung der Scheiben (4, 6) voneinander das Kupplungs- oder das Bremspedal (2) dazu bringt, aufgrund seines eigenen Gewichts oder mit Hilfe einer Torsionsfeder in Richtung Hinterwand des Fußraums zu schwenken, **dadurch gekennzeichnet, dass** diese Trennmittel (8, 9; 13a, 13b; 14a, 14b) eine Abstandsscheibe (9) umfassen, die auf der besagten Rotationsachse (5) zwischen der Steuerscheibe (4) und der Vorgelegescheibe (6) angebracht ist.

2. Vorrichtung nach Anspruch 1, **dadurch gekennzeichnet, dass** der Bedienhebel (2) des Pedals (3) einen Finger (15) umfasst, der sich in einer in die Vorgelegescheibe (6) eingearbeiteten Öffnung (16) verschieben kann und die relative Rotationsbewegung der zwei Scheiben (4, 6) bei ihrer Trennung begrenzt.

3. Vorrichtung nach einem der Ansprüche 1 oder 2, **dadurch gekennzeichnet, dass** die Verbindungsmittel mindestens zwei Befestigungsstifte (11) umfassen und vorzugsweise vier Befestigungsstifte, welche die zwei Scheiben (4 und 6) senkrecht durchqueren und miteinander verbinden.

4. Vorrichtung nach Anspruch 3, **dadurch gekennzeichnet, dass** der Finger (15) länger ist als die Befestigungsstifte (11), um die axiale Beabstandung der Scheiben (4 und 6) und die Übertragung der Kraft des Bedienhebels (2) auf den Steuerhebel (7) nach Auslösen der Vorrichtung zu ermöglichen.

5. Vorrichtung nach einem der Ansprüche 1 bis 4, **dadurch gekennzeichnet, dass** die Abstandsscheibe (9) mit einem radialen Arm verbunden ist, der einen Kipphebel (8) bildet, **dadurch**, dass die Befestigungsstifte (11) die drei Scheiben (4, 6, 9) senkrecht durchqueren, um eine Baugruppe anliegender Scheiben zu bilden, wobei die der Steuerscheibe (4) und/oder der Vorgelegescheibe (6) und der Abstandsscheibe (9) gegenüberliegenden Seiten (4a, 9a, 9b, 6a) jeweils Rampen und Gegenrampen (13a, 13b; 14a, 14b) umfassen, die bei einem Frontalaufprall auf das Fahrzeug zusammenwirken, indem sie über ein mit der Fahrzeugstruktur verbundenes Teil (10) auf den Kipphebel (8) zurückwirken, um das Drehen des Kipphebels (8) und die axiale Beabstandung der Steuerscheibe und/oder der Vorgelegescheibe (6) in Bezug zur Abstandsscheibe (9) durch Zerbrechen der Befestigungsstifte (11) der drei Scheiben hervorzurufen.

6. Vorrichtung nach Anspruch 5, **dadurch gekennzeichnet, dass** das mit der Fahrzeugstruktur verbundene Teil (10) in einem vorbestimmten Abstand vom Kipphebel (8) platziert ist und sich zurückzieht, um auf den Kipphebel aufzuprallen, damit dieser sich dreht, so dass die Nockenbewegung der besagten Rampen und Gegenrampen (13a, 13b; 14a, 14b) eine Vortriebskraft zum Zerbrechen der Befestigungsstifte (11) und eine entsprechende seitliche Verschiebung der Steuerscheibe (4) und/oder der Vorgelegescheibe (6) in Bezug auf die Abstandsscheibe (9) ausübt und eine Trennung der Steuerscheibe (4) und der Vorgelegescheibe (6) voneinander bewirkt und das Pedal (3) dazu veranlasst, aufgrund seines eigenen Gewichts oder mit Hilfe einer Torsionsfeder in Richtung Rückwand des Fußraums zu schwenken.

7. Vorrichtung nach einem der Ansprüche 5 oder 6, **dadurch gekennzeichnet, dass** die Befestigungsstifte (11) mit der Vorgelegescheibe (6) oder der Steuerscheibe (4) verbunden sind und durch Anliegen die drei Scheiben (4, 6,9) mittels ihrer randgeformten Enden (12) verbinden, die bei einer Beabstandung der Steuerscheibe (4) und/oder der Vorgelegescheibe (6) in Bezug zur Abstandsscheibe (9) brechen.

8. Vorrichtung nach einem der Ansprüche 5 bis 7, **dadurch gekennzeichnet, dass** das mit der Fahrzeugstruktur verbundene Teil (10) ein Element ist, das mit dem Querträger des Armaturenbretts des Fahrzeugs fest verbunden ist, so wie ein Säulenträger, der dazu bestimmt ist, die Lenksäule in Bezug zu dem besagten Querträger zu halten.

9. Vorrichtung nach einem der Ansprüche 5 bis 8, **dadurch gekennzeichnet, dass** die Scheiben durch Pressen - Gegenpressen hergestellt sind, um Vorsprünge in Form von Rampen (13a, 13b) und Vertiefungen in Form von Schlitzen (14a, 14b) zu bilden, welche die besagten Rampen und Gegenrampen begrenzen.

10. Vorrichtung nach einem der Ansprüche 5 bis 8, **dadurch gekennzeichnet, dass** die Scheiben aus Spritz-Kunststoff hergestellt sind, um Vorsprünge in Form von Rampen (13a, 13b) und Vertiefungen in Form von Schlitzen (14a, 14b) zu bilden, welche die besagten Rampen und Gegenrampen begrenzen.

11. Vorrichtung nach einem der Ansprüche 1 bis 9, **dadurch gekennzeichnet, dass** der Kipphebel (8) aus Metall hergestellt ist, und zum Beispiel aus Stahl.

12. Vorrichtung nach einem der Ansprüche 1 bis 9, **dadurch gekennzeichnet, dass** der Kipphebel (8) aus Kunststoff hergestellt ist.

13. Vorrichtung nach einem der Ansprüche 1 bis 12, **dadurch gekennzeichnet, dass** zwischen der Steuerscheibe (4) und der Vorgelegescheibe (6) eine Scheibe (20) gleicher Dicke wie der Kipphebel (8) zwischengelagert ist, der zu diesem Zweck eine Bohrung zur Aufnahme der Scheibe aufweist, wobei die Rotation zwischen dem Kipphebel (8) und der Scheibe (20) frei ist.

14. Vorrichtung nach Anspruch 13, **dadurch gekennzeichnet, dass** die Scheibe (20) auf jeder Seite mindestens zwei Stifte (21) aufweist, wobei die an der Seite der Steuerscheibe (4) gelegenen Stifte in die entsprechenden Öffnungen dieser Scheibe eingepresst sind und die an der Seite der Vorgelegescheibe (6) gelegenen Stifte gleitend in die entsprechenden Öffnungen dieser Scheibe montiert sind.

15. Vorrichtung nach Anspruch 14, **dadurch gekennzeichnet, dass** die Scheibe (20) und die Stifte (21) vorzugsweise aus Metall hergestellt sind.

16. Vorrichtung nach einem der Ansprüche 1 bis 15, **dadurch gekennzeichnet, dass** die Niete (22) in der Anzahl von mindestens zwei die Steuerscheibe (4), den Kipphebel (8) und die Vorgelegescheibe (6) durchqueren, um die Baugruppe in der Querrichtung bei Abwesenheit eines Aufpralls zu verbinden, wobei diese Niete in den im Kipphebel (8) eingearbeiteten Öffnungen (23) gleiten und es diesem gestatten, bei einem Aufprall unter Einwirkung des vorgenannten Teils (10) in eine Rotationsbewegung versetzt zu werden, ohne gleichzeitig das Kupplungs- oder das Bremspedal mitzunehmen.

17. Vorrichtung nach einem der Ansprüche 13 bis 16, **dadurch gekennzeichnet, dass** anstelle der Scheibe (20) ein Keilsystem vorgesehen ist.
